# EUROPEAN PATENT SPECIFICATION

(11) **EP 2 994 352 B1**
(45) Date of publication and mention of the grant of the patent: **20.12.2017**
(21) Application number: 14730570.0
(22) Date of filing: 07.05.2014
(51) Int. Cl.: B60R 21/232, B60R 21/235

(54) **AIRBAG FOR A MOTOR VEHICLE**
AIRBAG FÜR EIN KRAFTFAHRZEUG
COUSSIN DE SÉCURITÉ GONFLABLE POUR UN VÉHICULE MOTORISÉ

(30) Priority: 07.05.2013 DE 202013004273 U
(43) Date of publication of application: 16.03.2016
(73) Proprietor: Key Safety Systems, Inc., Sterling Heights, MI 48314 (US)
(72) Inventor: MUZZAFFAR, Shoaib, 63128 Dietzenbach (DE); VOLKMANN, Matthias, 61476 Kronberg (DE)
(74) Representative: Eisenführ Speiser
(86) International application number: PCT/IB2014/000690
(87) International publication number: WO 2014/181168

(56) References cited:
- EP-A1- 2 540 580
- WO-A1-2006/069669
- US-A1- 2003 205 889
- US-A1- 2004 212 179
- US-B1- 6 666 477

## Description

The invention relates to an airbag for a motor vehicle, comprising a gas cushion which is formed from at least two layers of fabric and which is brought on inflation from a folded or rolled state into an unfolded state, the at least two layers of fabric being connected to each other at connection points to form inflated cushion portions and non-inflated cushion portions, and the connection points having linear connection points and rounded connection points.

Such an airbag for a motor vehicle is known, for example, from EP 1 462 321 B1 or EP 1 228 930 B1. EP 2 540 580 A1 discloses an airbag according to the preamble of claim 1. Using such airbags for lateral impact protection device is known from the prior art. The gas cushion is disposed in the rolled-up or folded state in the roof edge area. When the gas cushion is inflated, it unfolds itself and extends from the roof edge area between the side panes and surrounding side frame portions of the vehicle body and the position of a vehicle passenger or the positions of two or more vehicle passengers seated one behind the other. In rollover situations, in particular, it is essential that the inflating pressure in the inflated cushion portions be maintained for a certain duration to ensure that the required safety function is provided, in particular the required impact protection against the side parts of the vehicle.

The object of the invention is therefore to improve, at no additional expense, the tear strength of the connection points defining the inflated and the non-inflated cushion portions, in order to ensure that the inflating pressure is maintained for the required duration.

This object is achieved by an airbag having the features specified in claim 1.

The dependent claims contain advantageous developments of the invention.

In the invention, the linearly extending connection points are arranged at an angle of 45° relative to the threads forming the layers of fabric, which may be present in the form of warp threads and weft threads. However, the linearly extending connection points may be arranged at an angle which deviates slightly from the aforementioned angle and which does not impair the tear strength of the connection points when the gas cushion is in the inflated state. This slight deviation in angle may be ± 10°.

Linear connection points running at right angles to each other may preferably be connected to each other by rounded connection points.

Self-enclosed connection points with a square or rectangular shape and with rounded corners are preferably used to form the inflated or non-inflated cushion portions.

When the cushion portions are of different sizes, the radii of the connection points provided at the rounded corners are proportional to the lengths of the respective linearly extending connection points of the cushion portions or proportional to the dimensions of the cushion portions.

The at least two layers of fabric in the gas cushion may be of the OPW (one-piece-woven) type. or may be made from two or more sections of fabric.

In the case of an OPW-type gas cushion, the connections between the layers of fabric are formed by joining the warp and weft threads in the two layers of fabric made from a single piece of fabric.

In gas cushions made of two or more sections of fabric, the connections are formed as the tuck joining the layers of fabric.

The gas cushion is preferably formed in such a way that it can be disposed in the folded state between an inner side region of the motor vehicle, and a passenger position or a plurality of passenger positions arranged one behind the other. To that end, the gas cushion can be disposed in the folded or rolled-up state in the roof edge area and on inflation can be unfolded downwards towards the vehicle floor.

An embodiment of the invention shall now be described in more detail with reference to the Figures,
in which
- Fig. 1: shows an embodiment of the airbag with an unfolded gas cushion after inflation;
- Fig. 2: shows an enlarged view of a cushion portion formed by connection points in the gas cushion; and
- Fig. 3: shows a graph of the bursting pressure of conventionally embodied cushion portions and a cushion portion embodied in accordance with the invention.

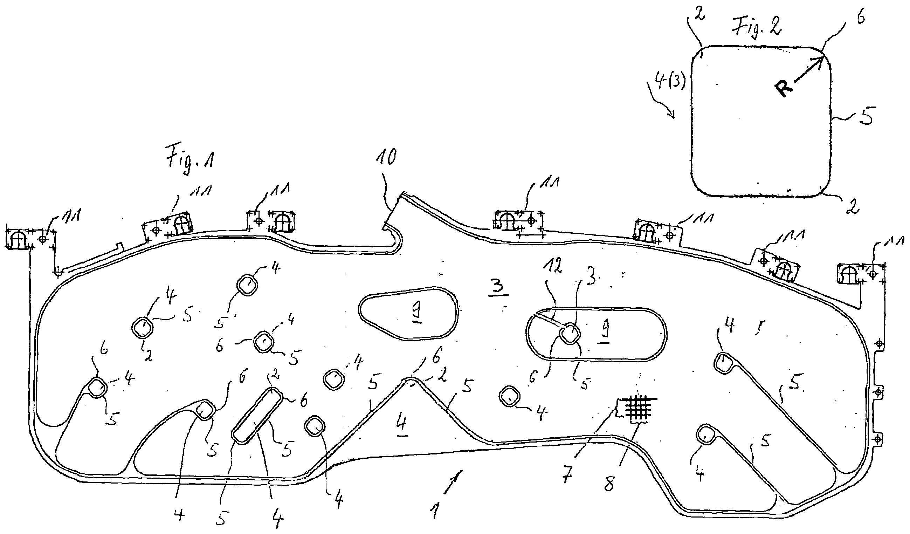

Fig. 1 shows an embodiment of the inventive airbag comprising a gas cushion 1 in the folded state after inflation. To inflate gas cushion 1, inflation gas is fed in the known manner via an opening 10 into an inflatable cushion portion 3 of gas cushion 1. In addition to the inflatable cushion portion 3, gas cushion 1 also has non-inflatable cushion portions 4 and 9. As will be described in detail below, the non-inflatable cushion portions 4 are embodied in accordance with the invention, and the non-inflatable cushion portions 9 are embodied in the conventional manner.

The gas cushions may be of the OPW type, or may be formed of several sections, for example two sections. Fixing means 11 with which the gas cushion can be fixed to the vehicle body, in particular in the roof edge area, are provided at the upper edge of gas cushion 1.

In the embodiment shown, the non-inflatable cushion portions 4 are enclosed by linearly extending connection points 5 and rounded connection points 6. These connection points separate the non-inflatable cushion portions 4 from inflatable cushion portion 3. In the embodiment shown, the non-inflatable cushion portions 4 are square or rectangular in shape with rounded corners 2. Fig. 2 shows, in a larger scale, a non-inflatable cushion portion 4 with a square shape which, as will be described below, may also be an inflatable cushion portion 3.

The embodiment shown in Fig. 1 also includes an approximately triangular, non-inflatable cushion portion 4, which is defined by the lower edge of gas cushion 1 and two connection points 5 running at right angles to each other, and by the rounded connection point 6 at the apex of the triangular shape. The lower edge of gas cushion 1 may be the edgefold of the OPW type, or the connecting seam with which the sections of fabric in gas cushion 1 are joined together.

The linear connection points 5 and the rounded connection points 6 may also enclose inflatable cushion portions 3 and demarcate them from a non-inflatable cushion portion, for example a cushion portion 9. In that regard, it is possible to supply a filling gas, for example with the aid of a gas conduit 12 which connects the other inflatable cushion portions 3 to the inflatable cushion portion 3 enclosed by connection points 5 and 6.

The linear connection points 5 and the rounded connection points 6 are thus embodied in such a way that they separate the non-inflatable cushion portions 4 from inflatable cushion portions 3. In order to ensure that the inflation gas remains in the inflatable cushion portions 3 for a sufficient duration of time in the event of an accident, for example a rollover situation, it is necessary that connection points 5 and 6, which are provided between the non-inflatable and inflatable cushion portions, withstand the inflation pressure and do not rip open.

To ensure this, the linear connection points 5 extend at an angle of 45°, for example, relative to the longitudinal extensions of threads 7 and 8 (warp and weft threads) from which the layers of fabric forming gas cushion 1 are woven. Measurements have shown that, when filling pressure has been built up in gas cushion 1, the forces acting on linear connection points 5, which are arranged at an angle of approximately 45° relative to the threads of fabric 7, 8, are smaller than the forces acting on connection points which are arranged parallel and perpendicular, for example, to threads 7, 8. The forces involved differ by a factor of about 1.7.

It is advantageous, when connection points 5 run perpendicularly to each other, to join the connection points 5 running perpendicularly to each other, for example, at their converging ends via rounded connection points 6. The radii of rounded connection points 6 enclosing rounded corners 2 are proportional in dimension to the lengths of linear connection points 5. The following table specifies the radii of the curved connection points for square cushion portions 3, 4 with rounded corners and for different side lengths. The table shows the side lengths, i.e. the lengths of linear connection points 5, and the associated radii of the curved connection points 6.

| **Side lengths** | **Radii** |
|---|---|
| 10 mm | 3.75 mm |
| 15 mm | 5.6 mm |
| 20 mm | 7.5 mm |
| 25 mm | 9.4 mm |
| 30 mm | 11.5 mm |
| 35 mm | 13.2 mm |
| 40 mm | 15.0 mm |
| 45 mm | 16.9 mm |
| 50 mm | 18.8 mm |
| 55 mm | 20.6 mm |
| 60 mm | 22.5 mm |
| 65 mm | 24.4 mm |
| 70 mm | 26.3 mm |
| 75 mm | 28.1 mm |
| 80 mm | 30.0 mm |

It can be seen from the above that the radii of curved connection points 6 change by the same factor as the lengths of linear connection points 5. In the case of rectangular cushion portions, the factor by which the radii change is the same as the factor by which the average of the short and the long side lengths changes.

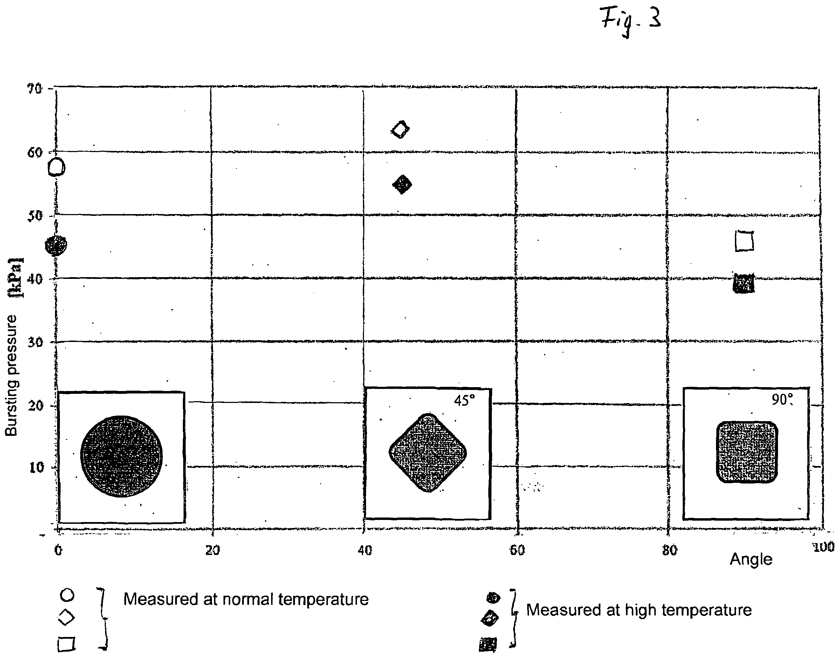

The graph in Fig. 3 shows the different bursting pressures for a circular cushion portions, a square cushion portion which was arranged in accordance with the invention at an angle of 45° relative to the threads 7, 8 of the fabric layers, and a square cushion portion which was arranged with the vertically demarcating connection points at right angles (90°) to the horizontal extending threads 7, and with the horizontally extending demarcating connection points at right angles (90°) to the vertical threads 8. The diameter of the circular cushion portion and die diagonal dimensions of the square cushion portions was 20 mm. The thickness of the gas cushion was 160 mm. The bursting pressures were measured at normal temperature and at high temperature. The respective values are entered in the graph in Fig. 3.

It can be seen that the bursting pressures are 10 to 12% higher when the cushion portion is arranged at an angle of 45° relative to threads 7, 8 than in the case of the circular cushion portion and the cushion portion arranged at 90° relative to threads 7, 8.

When the orientation of threads 7, 8 changes by a particular angle, for example, by an angle of 45°, the arrangement in the gas cushion of cushion portions 3 and 4 formed by the linear and rounded connection points 5 and 6 changes accordingly, with an approximate 45° orientation relative to threads 7, 8 being kept.

### List of reference signs

- 1: Gas cushion
- 2: Corners
- 3.: Inflatable cushion portion
- 4.: Non-inflatable cushion portion
- 5.: Linear connection points
- 6: Rounded connection points
- 7, 8: Threads of fabric (warp and weft threads)
- 9: Cushion portions
- 10: Opening
- 11: Fixing means
- 12: Gas conduit

## Claims

1. An airbag for a motor vehicle, comprising a gas cushion (1) which is formed from at least two layers of fabric and which is brought on inflation from a folded or rolled state into an unfolded state, the at least two layers of fabric being connected to each other at connection points to form inflated cushion portions (3) and non-inflated cushion portions (4), and the connection points having linear connection points (5) and rounded connection points (6),
wherein the linearly extending connection points (5) are arranged at an angle of 45° relative to the threads (7, 8) forming the layers of fabric, or at an angle deviating slightly therefrom that does not impair the tear strength of the connection points when the gas cushion (1) is in the inflated state, **characterized in that** when the cushion portions (3, 4) are of different sizes, the radii (R) of the connection points (6) provided at the rounded corners (2) are proportional to the lengths of the respective linearly extending connection points (5) of said cushion portions (3, 4).

2. The airbag according to claim 1,
**characterized in that**
linear connection points (5) running at right angles to each other are connected to each other by rounded connection points (6).

3. The airbag according to claim 1 or 2,
**characterized in that**
the cushion portions (3, 4) formed by the linearly extending connection points (5) are formed with a square or rectangular shape, with rounded corners (2) defined by the rounded connection points (6).

4. The airbag according to any one of claims 1 to 3,
**characterized in that**
the gas cushion (1) is of the OPW (one-piece-woven) type, or consists of sections of fabric sewn together.

5. The airbag according to any one of claims 1 to 4,
**characterized in that**
the gas cushion (1) is suitable in the folded state for being disposed between an inner side region of the motor vehicle and a passenger position or a plurality of passenger positions arranged one behind the other.

## Patentansprüche

1. Airbag für ein Motorfahrzeug, aufweisend ein Gaskissen (1), welches aus wenigstens zwei Textillagen gebildet ist und welches beim Aufblasen von einem gefalteten oder gerollten Zustand in einen ungefalteten Zustand gebracht wird, wobei die wenigstens zwei Textillagen an Verbindungspunkten miteinander zum Bilden aufgeblasener Kissenabschnitte (3) und nicht aufgeblasener Kissenabschnitte (4) verbunden sind, wobei die Verbindungspunkte lineare Verbindungspunkte (5) und gerundete Verbindungspunkte (6) aufweisen,
wobei die linear sich erstreckenden Verbindungspunkte (5) in Winkeln von 45° relativ zu den Fäden (7, 8) angeordnet sind, die die Textillagen bilden, oder mit einem Winkel, der leicht davon abweicht und die Reißstärke der Verbindungspunkte nicht schwächt, wenn das Gaskissen (1) in dem aufgeblasenen Zustand ist, **dadurch gekennzeichnet, dass**, wenn die Kissenabschnitte (3, 4) verschiedene Größen aufweisen, die Radien (R) der Verbindungspunkte (6), die an den gerundeten Ecken (2) vorgesehen sind, proportional zu den Längen der entsprechenden linear sich erstreckenden Verbindungspunkte (5) der Gaskissenabschnitte (3, 4) sind.

2. Airbag nach Anspruch 1, **dadurch gekennzeichnet dass** lineare Verbindungspunkte (5), die mit rechtem Winkel zueinander verlaufen, durch gerundete Verbindungspunkte (6) miteinander verbunden sind.

3. Airbag nach Anspruch 1 oder 2, **dadurch gekennzeichnet dass** die Kissenabschnitte (3, 4), die durch die sich linear erstreckenden Verbindungspunkte (5) gebildet sind, mit einer quadratischen oder rechteckigen Form gebildet sind, und mit gerundeten Ecken (2), die durch gerundete Verbindungspunkte (6) definiert werden, verbunden sind.

4. Airbag nach einem der Ansprüche 1 bis 3, **dadurch gekennzeichnet, dass** das Gaskissen (1) vom OPW (on-piece-woven) Typ ist, oder aus Abschnitten aus miteinander vernähtem Textil besteht.

5. Airbag nach einem der Ansprüche 1 bis 4, **dadurch gekennzeichnet, dass** das Gaskissen (1) in dem gefalteten Zustand dazu geeignet ist, zwischen einem inneren Seitenabschnitt des Motorfahrzeugs und einer Passagierposition oder einer Mehrzahl an Passagierpositionen hintereinander angeordnet zu sein.

## Revendications

1. Coussin d'air pour un véhicule à moteur, comprenant un coussin (1) de gaz, qui est formé à partir d'au moins deux couches de tissu et qui passe par gonflage d'un état plié ou enroulé à un état déplié, les au moins deux couches de tissu étant reliées l'une à l'autre à des points de liaison pour former des parties (3) gonflées de coussin et des parties (4) non gonflées de coussin, et les points de liaison ayant des points (5) de liaison linéaires et des points (6) de liaison arrondis,
dans lequel les points (5) de liaison s'étendant linéairement font un angle de 45° avec les fils (7, 8) formant les couches de tissu ou un angle s'en écartant légèrement, qui ne porte pas atteinte à la résistance à la déchirure des points de liaison lorsque le coussin (1) de gaz est dans l'état gonflé, **caractérisé en ce que**, lorsque les partie (3, 4) du coussin ont des dimensions différentes, les rayons (R) des points (6) de liaison prévus aux coins (2) arrondis sont proportionnels aux longueurs des points (5) respectifs de liaison s'étendant linéairement des parties (3, 4) du coussin.

2. Coussin d'air suivant la revendication 1,
**caractérisé en ce que**
des points (5) de liaison linéaires à angle droit l'un par rapport à l'autre sont reliés l'un à l'autre par des points (6) de liaison arrondis.

3. Coussin d'air suivant la revendication 1 ou 2,
**caractérisé en ce que**
les parties (3,4) du coussin, formées par les points (5) de liaison s'étendant linéairement, ont une forme carrée ou rectangulaire en ayant des coins (2) arrondis définis par les points (6) de liaison arrondis.

4. Coussin d'air suivant l'une quelconque des revendications 1 à 3,
**caractérisé en ce que**
le coussin (1) de gaz est du type OPW (tissé en une seule pièce) ou consiste en parties de tissu cousues ensemble.

5. Coussin d'air suivant l'une quelconque des revendications 1 à 4,
**caractérisé en ce que**
le coussin (1) de gaz est propre dans l'état plié à être mis entre une région latérale intérieure du véhicule à moteur et une position de passager ou une pluralité de positions de passager disposées les unes derrière les autres.
